# EUROPÄISCHE PATENTSCHRIFT

(11) **EP 1 585 266 B1**
(45) Veröffentlichungstag und Bekanntmachung des Hinweises auf die Patenterteilung: **23.01.2008**
(21) Anmeldenummer: 05005714.0
(22) Anmeldetag: 16.03.2005
(51) Int. Cl.: H04L 12/40

(54) **Verfahren zur Datenübertragung**
Method for transferring data
Procédé de transfer des données

(30) Priorität: 24.03.2004 DE 102004014793
(43) Veröffentlichungstag der Anmeldung: 12.10.2005
(73) Patentinhaber: Bosch Rexroth AG, 70184 Stuttgart (DE)
(72) Erfinder: Schultze, Stephan, Dr., 97816 Lohr am Main (DE); Leurs, Ludwig, Dr., 97816 Lohr am Main (DE); Kynast, Rigobert, 97816 Lohr am Main (DE); Schmid, Thomas, 97840 Hafenlohr (DE)

(56) Entgegenhaltungen:
- EP-A- 0 755 137
- EP-A- 1 312 992
- EP-A- 1 355 456
- RALPH BELSCHNER ET AL: "FLEXRAY REQUIREMENTS SPECIFICATION" NN, 16. Mai 2002 (2002-05-16), XP002270307
- PELLER M ET AL: "byteflight specification Version 0.5 Draft" COPYRIGHT BY BMW AG, 29. Oktober 1999 (1999-10-29), XP002201782 Germany

## Beschreibung

Die Erfindung stammt aus dem Bereich der Datenübertragung gemäß des unabhängigen Anspruches 1. Sie befasst sich insbesondere mit der Übertragung von Echtzeitdaten in Kombination mit weniger zeitkritischen Daten innerhalb einer Übertragungsperiode.

In einem Kommunikationssystem werden Datentelegramme zwischen Stationen periodisch ausgetauscht. Neben dieser sogenannten zyklischen Kommunikation, die vorzugsweise in Echtzeit erfolgt, besteht der Bedarf an sogenannter ungeplanter oder azyklischer Kommunikation, wobei beliebige Protokolle innerhalb eines für alle Teilnehmer verbindlichen Zeitfensters eingebunden werden können.

Die EP 1 312 992 zeigt ein Verfahren zur Übertragung eines höherwertigen Protokolls wie TCP/IP ohne Beeinflussung des zyklischen Datenverkehrs, indem ein untergeordnetes Gerät (Slave) mittels eines Alarm - Requests die Übertragung einleitet und ein übergeordnetes Gerät (Master) veranlasst durch ein Kennzeichnungsdatenfeld weitere Nachrichtendatensätze bei dem untergeordneten Gerät abzurufen. Der Master leitet die Nachrichtendatensätze unter Verwendung einer vom Slave gelieferten Zieladresse an einen anderen Slave weiter.

Die US 2002/0091838 zeigt eine Methode zur Anpassung der Datenrate bei einem Feldbus, um eine ansteigende Datenmenge zu bewältigen. Eine neue Übertragungsrate wird mit allen Busteilnehmern vereinbart und von diesen für die weitere Kommunikation verwendet. Bei Inbetriebnahme erfolgt ggf. ein erneuter Abgleich zwischen allen Teilnehmern.

Die EP-A-1355456 beschreibt ein Verfahren zur Datenübertragung zwischen mittels eines Datenbusses kommunizierenden Teilnehmern, wobei die Datenübertragung in Form von Kommunikationszyklen erfolgt. Dabei sind innerhalb eines Kommunikationszyklus ein statisches und ein dynamisches Segment vorgesehen. Über einen Konfigurationsparameter kann die Länge des statischen Segments vorgegeben werden.

Die EP-A-0755137 offenbart ein hybrides Netzwerkprotokoll mit einem Arbitrierungsverfahren und wahlweise zuweisbaren Zeitschlitzen. Aus Ralph Belschner et al: "Flexray requirements specifications", XP002270307 ist eine Protokollspezifizierung des Standarts "Flexray" bekannt. Bei diesem Standart sind innerhalb eines Kommunikationszyklus ein statisches und ein dynamisches Segment vorgesehen. Aus Peller M et al: "byteflight specification Version 0.5 Draft", XP002201782 ist eine Protokollspezifikation des Standarts "Byteflight" bekannt.

Während erster Versuchsaufbauten der Anmelderin wurde festgestellt, dass abhängig von der teilnehmerspezifischen Datenmenge im Echtzeitkanal Fälle auftreten können, bei denen wegen zu geringer Bandbreite notwendige Zusatzdaten nicht mehr übertragen werden, wenn ihre Telegrammlänge zu groß wird. Insbesondere beim dynamischen Zu- und Abschalten von Busteilnehmern tritt dieses Problem auf. Unter der Annahme, dass zum Beispiel bei einer Übertragungsrate von 100 MBit/s eine Telegrammdauer von 1500 Byte für azyklische Zusatzdaten vorgesehen ist, ergäbe sich ein erforderliches Zeitfenster hierfür von 1500 x 8 Bit/Byte / 100 MBit/s = 120 µS. Unter der Annahme, dass ein Übertragungszyklus 128 µS umfasst, würden damit für die zyklischen Echtzeitdaten lediglich 8 µS zur Verfügung stehen, was in der Praxis wohl zu gering wäre.

Es ist nun die Aufgabe der Erfindung eine Lösung herbeizuführen, welche eine möglichst hohe Übertragungswahrscheinlichkeit für Zusatzdaten sicherstellt.

Diese Aufgabe löst die Erfindung, indem für den Austausch von Datentelegrammen zwischen den Teilnehmern innerhalb der für einen Übertragungszyklus vorgegebenen Zykluszeit wenigstens ein erstes und ein zweites Zeitfenster Verwendung findet, wobei das erste Zeitfenster zur Übermittlung von Prozessdaten und das zweite Zeitfenster zur Übermittlung von Zusatzdaten dient und die Länge der die Zusatzdaten repräsentierenden Datentelegramme innerhalb der Länge des korrespondierenden Zeitfensters vorgebbar ist wobei erfindungsgemäß die Teilnehmer aus der Differenz zwischen der Zykluszeit der Länge des Prozessdaten-Zeitfensters die zulässige Länge der Datentelegramme für Zusatzdaten ermitteln oder ein Parameter für den zeitlichen Beginn und ein weiterer Parameter für das Ende der die Zusatzdaten repräsentierenden Datentelegramme innerhalb eines Übertragungszyklus vorgesehen wird.

Der Übertragungszyklus ist hierbei als Periodendauer eines sich wiederholenden Datenrahmens zu verstehen. Der Datenrahmen umfasst wenigstens zwei Kanäle (Zeitfenster). Die Prozessdaten sind in der Regel zeitkritische Daten, während die Zusatzdaten weniger zeitkritische Daten umfassen, beispielsweise Konfigurationsdaten. Diese Konfigurationsdaten könnten über ein User Interface eingegeben oder mittels einer Steuerung vorgegeben sein. Die Übertragung muss im Gegensatz zu Echtzeitdaten in der Regel innerhalb eines größeren Zeitrahmens (Millisekunden) sichergestellt werden. Die Datentelegramme können Datenbytes, Checksummen, Adressen und weitere Informationen zur Sicherstellung der Übertragung und Zuordnung der Daten beinhalten.

Diese Anpassung der Datentelegrammlänge im Zusatz-Kanal wird an zeitliche Randbedingungen geknüpft, so dass je nach Zeitfensterlänge des Prozessdatenkanals variable Datentelegrammlängen im Zusatzkanal gesendet werden. Eine dynamische Adaption, abhängig von der Datenlast, ist damit ohne Weiteres realisierbar, ohne den Betrieb für Prozessdaten zu beeinflussen. Diese Adaption könnte sogar von Übertragungszyklus zu Übertragungszyklus unterschiedlich sein, je nachdem welche "Restzeit" im Zusatzdatenfenster noch zur Verfügung steht. Vorteil des Verfahrens: Die in beiden Zeitfenstern übertragenen Daten sind völlig unabhängig voneinander übermittelbar bzw. beeinflussbar und können an die Betriebsbedingungen adaptiert werden.

Vorteilhaft wäre es auch, wenn die Prozessdaten in Echtzeit und zyklisch, d.h. mit jedem Zyklus, übertragen werden. Dies würde das Verfahren zum Einsatz bei Feldbussen für die Führungskommunikation geeignet machen und das selektive Tunneln von Zusatzdaten ermöglichen, ohne eine Änderung der Übertragungsrate vorzunehmen. Echtzeit bedeutet hier, dass zeitkritische Daten beim Empfänger zur Verarbeitung bereitstehen müssen bevor Datenverlust durch Pufferüberläufe oder Asynchronität entsteht, und damit zum Beispiel bei der Ansteuerung eines Servomotors ruckartige und/oder gleichmäßige Bewegungsabläufe resultieren. Erreicht werden kann dies durch ressourcenschonende Programmierung, ausreichend hohe Taktrate und Gebrauch von autonomen Hardwaremodulen zur Entlastung der CPU sowie mittels der Verwendung geeigneter Betriebssysteme (Nukleus +, etc.).

Wenn Prozessdaten und/oder Zusatzdaten auf mehr als zwei Zeitfenster gleicher und/oder unterschiedlicher Länge und/oder unterschiedlicher Reihenfolge innerhalb eines Übertragungszyklus verteilt sind, ergibt sich eine flexible Ausnutzbarkeit der zur Verfügung stehenden Übertragungszeit.

Ein erfindungsgemäßes Verfahren, bei dem der Sendebeginn für ein Datentelegramm der Zusatzdaten innerhalb der Länge des korrespondierenden Zeitfensters variabel ist, erhöht die Flexibilität weiter. Innerhalb des Zusatzdatenkanals gibt es somit keine Festlegung wann gesendet werden muss. Das bedeutet, dass jeder sendewillige Teilnehmer selbst festlegen kann, wann er senden will. Insbesondere bei Realisierung eines Abfragemodus, bei dem aufgrund einer Teilnehmeranfrage Antworten von weiteren Teilnehmers resultieren können, könnte man innerhalb des Zeitfensters des Zusatz-Kanals Anfragetelegramme und Antworttelegramme unterbringen.

Die Zeitdauer zwischen Frage und Antwort ist dabei z.B. durch die Bearbeitungszeit der angefragten Teilnehmers bestimmt und systemabhängig.

Ordnet man jedem Teilnehmer innerhalb des korrespondierenden Zeitfensters für Nutzdaten einen eigenen Zeitpunkt für den Sendebeginn zu, so beugt dies Kollisionen vor. Wenn nun jedem Teilnehmer eine bestimmte Sendezeit erlaubt ist, so lässt sich relativ leicht für die einzelnen Teilnehmer abschätzen, ob bzw. wann die Leitung belegt sein könnte. Wollen also alle Teilnehmer im Worst Case gleichzeitig senden, so gehorchen diese einer vorgegebenen Rangfolge, die sich auch den oben erwähnten Sendezeitpunkten ergibt. Sendet zunächst nur ein Teilnehmer, so erhält er automatisch die höchste Priorität (siehe weiter unten).

Es wäre auch denkbar die Sendezeitpunkte für den Sendebeginn innerhalb jedes Übertragungszyklus neu festzulegen, z.B. wenn sich die durchschnittliche Länge der Datentelegramme ändert. Diese Adaption könnte mittels eines in jedem Teilnehmer realisierten Zufallsgenerators erfolgen oder von einem übergeordneten Steuermechanismus vorgebbar sein. Auch ein Austausch der teilnehmerspezifischen Zeitpunkte für den Sendebeginn zwischen den Busteilnehmern untereinander wäre denkbar.

Die Daten im Zusatzkanal können vorteilhaft auch azyklisch übertragen werden, d.h. nicht mit jedem Übertragungszyklus. Der Kanal steht damit nur bei Bedarf zur Verfügung und erfordert keine Echtzeitbedingungen. Er kann als Backup-Kanal fungieren und ggf. Bandbreite für Prozessdaten freigeben.

Sind die Datentelegramme im Zusatzkanal in Protokolle eingebundene, wie beispielsweise das HTTP (Hyper Text Transfer Protokoll), das FTP (File Transfer Protokoll), TELNET, etc. könnten diese zur Darstellung von Statusinformationen und zur Konfiguration von Teilnehmern verwendet werden. Auch eine sichere Übertragung ist damit realisierbar und die Verwendung von Standard-Stacks (Firmwaremodule) möglich, wie sie bereits von vielen Betriebssystemen serienmäßig zur Verfügung gestellt werden. Dies erleichtert die Realisierung und ist zudem noch preiswert, da diese Stacks nicht zugekauft oder gar neu entwickelt werden müssen. Ein weiterer Vorteil bzw. die Konsequenz aus dem zuvor erwähnten ist, dass ein Routing z.B. von einem PC über eine Steuerung zu einem Antrieb sehr einfach wird, da die Steuerung lediglich das IP-Telegramm ohne Interpretation weiterreichen muss und somit eine Gateway - Funktionalität besitzt.

Ist das Verfahren so ausgelegt, dass die Teilnehmer aus Kenntnis der Zykluszeit und Kenntnis der Länge des Prozessdaten-Zeitfensters die zulässige Länge der Datentelegramme für Nutzdaten selbständig ermitteln, insbesondere auch mittels der Kenntnis der geplanten bzw. vorgegebenen Sendezeit pro Teilnehmer im Zusatzkanal, so können diese ihre Sende- bzw. Empfangsstrukturen entsprechend selbst adaptieren. Die dynamische Verwaltung der Bandbreite wäre dann und im Gegensatz zum Stand der Technik, wo alle relevanten Daten über Feldbusparameter von der Steuerung vorgegeben werden müssen, weitestgehend automatisiert.

Zweckdienlich kann es auch sein, wenn Datentelegramme auf mehrere Übertragungszyklen verteilt sind. Längere Datentelegramme, die aufgrund zu geringer Bandbreite nicht mehr im Zeitfenster untergebracht werden können, würden somit über mehrere Zyklen übertragen. Aufgrund der zeitkritischen Anforderungen für die Prozessdaten dürfte diese Methode insbesondere nur für die Zusatzdaten interessant sein.

Wenn wenigstens ein Teilnehmer als übergeordneter Hauptteilnehmer fungiert und die zulässige Telegrammlänge der Nutzdaten an alle weiteren als Nebenteilnehmer fungierenden Teilnehmer kommuniziert, insbesondere im Rahmen einer Systeminitialisierung und/oder bei einer Inbetriebnahme, dann übernimmt der Hauptteilnehmer quasi als Zwischeninstanz die Schnittstelle zwischen untergeordneten Teilnehmern und übergeordneten Teilnehmerebenen dar. Diese hierarchische Struktur erleichtert, vor allem bei komplexen Applikationen, die Verwaltung und Kontrolle und ermöglicht eine Erhöhung der Rechenkapazität. Hauptteilnehmer und Nebenteilnehmer können bzgl. ihres Aufbaus prinzipiell identisch sein, wobei der Hauptteilnehmer jedoch als Kommunikationsmaster ausgebildet ist und an höhere Kommunikationsschichten angebunden wird. Eine Initialisierung wird durch Parameter ermöglicht, wie sie beispielsweise bei der Datenkommunikation über Feldbusse bekannt sind. Es kann ein Parameter für den zeitlichen Beginn und ein weiterer Parameter für das Ende innerhalb eines Übertragungszyklus vorgesehen werden. Denkbar wäre auch eine Abwandlung, bei der der Master für jeden Übertragungszyklus die Lage des Zusatz-Kanals durch eine Kennung vorgibt. Dies wäre insbesondere bei Kommunikationssystemen mit ständig variierendem Kommunikationszyklus vorteilhaft.

Erhält ein Nebenteilnehmer vom Hauptteilnehmer eine Sendeberechtigung, insbesondere für Prozessdaten, so können Kollisionen beim Prozessdatenaustausch vermieden und eine optimale Ausnutzung der Bandbreite erzielt werden. Praktisch wird dies so realisiert, dass die Teilnehmer ihre Daten in einem vom Master bereitgestellten Telegramm ablegen und dieser dann das Telegramm erneut einliest.

Wenn jeder Teilnehmer nach Bedarf Nutzdaten auch ohne Sendeberechtigung senden kann, belegen die Teilnehmer völlig frei den Zusatz-Kanal, welcher anschließend vom schnellsten Teilnehmer für die Dauer des Sendevorganges belegt ist (siehe oben). Diese Methode der Kommunikation ist ohne großen Aufwand realisierbar. Der überwiegende Kommunikationsanteil wird jedoch in einem solchen Falle auch im Zusatz-Kanal eine Master/Slave -Kopplung sein, d.h. die Steuerung fragt die Slaves ab und die Slaves antworten nur auf diese Abfrage. Hierdurch wird durch den Master die Belegung gezielt gesteuert. Der Master könnte außerdem die weiter oben erwähnte Steuerfunktion übernehmen und entweder einmalig oder bei Bedarf auch mit jedem Übertragungszyklus den Zeitpunkt für den zulässigen Sendebeginn der Teilnehmer innerhalb Zusatz-Kanals festlegen und überwachen.

Das erfindungsgemäße Verfahren eignet sich besonders, wenn es sich bei den Teilnehmern um digitale Antriebe, Steuerungen, intelligente Messaufnehmer, Industrie-PCs oder ganz allgemein elektronische Geräte mit Busanschluss handelt, insbesondere zur Ausführung bzw. Regelung von Bewegungsabläufen in automatisierten Prozessen, wobei die Prozessdaten Sollwerte und/oder Istwerte für Lage, Geschwindigkeit und Beschleunigung sind. Der Grund hierfür ist, dass in der Automatisierungstechnik, besonders in Verbindung mit der Führungskommunikation und Konfiguration für Antriebsregler mittels Bussystemen, wie SERCOS interface ® (SERCOS-III) sowohl echtzeitkritische Prozessdaten als auch Zusatzdaten mit weniger zeitkritischen Anforderungen übertragen werden müssen. Die zuvor erwähnte Systeminitialisierung würde im Falle von SERCOS interface ® mittels der S/P-Parameter erfolgen. Auch auf andere Busse wie PROFINET oder Powerlink wäre das Verfahren übertragbar.

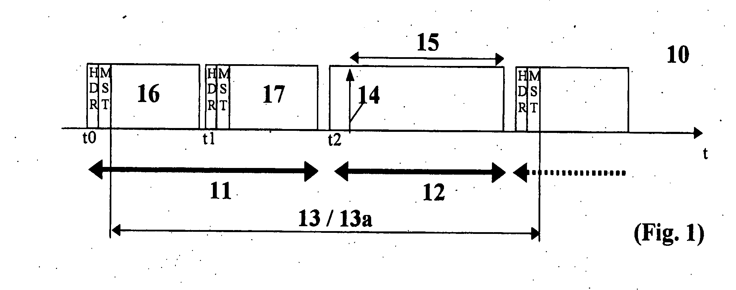

Figur 1 zeigt die schematische Darstellung eines Übertragungszyklus 13 mit vorgegebener Zykluszeit 13a und wenigstens einem ersten 11 und einem zweiten 12 Zeitfenster entlang der Zeitachse t, wobei das erste Zeitfenster 11 Prozessdaten und das zweite Zeitfenster 12 Zusatzdaten enthält. Dargestellt sind auch zwei Datentelegramme 16, 17 innerhalb des Zeitfensters 11 für Prozessdaten mit Datenfeldern (HDR/MST) zur Synchronisation und Verwaltung. Weiterhin ist der zeitliche Sendbeginn 14 mit der daraus resultierenden verbleibenden Sendezeit 15 im Zeitfenster 12 gezeigt.

Im Folgenden wird davon ausgegangen, dass an einen Datenbus mit erfindungsgemäßem Übertragungsmechanismus ein Teilnehmer als Hauptteilnehmer konfiguriert ist und weitere Teilnehmer als gleichberechtigte Nebenteilnehmer fungieren.

Der Hauptteilnehmer sendet z.B. zwei Datentelegramme 16, 17 innerhalb des Zeitfensters 11, welches hier als Prozessdatenkanal bezeichnet wird. In dem ersten Datentelegramm 16 innerhalb dieses Prozessdatenkanals 11 können beispielsweise Sollwerte für digitale Antriebe enthalten sein, in dem Datentelegramm 17 Istwerte. Der Prozessdatenkanal 11 kann bei Bedarf noch weitere Datentelegramme 16, 17 oder Datentelegrammpaare 16, 17, zum Beispiel in Abhängigkeit von der Anzahl der Teilnehmer zum Austausch betriebsrelevanter Prozessdaten (z.B. Geschwindigkeits- oder Positionsdaten) umfassen. Eine vorzugsweise Echtzeitkommunikation im Prozessdatenkanal 11 wird dabei mit jedem Zyklus 13 wiederholt und die Daten auch mit jedem Zyklus 13 je nach Bedarf und Anwendungsfall aktualisiert. Die zeitliche Lage der Datentelegramme (t0, t1) innerhalb des Prozessdatenkanals 11 und auch der Telegrammaufbau bzw. die Bedeutung der Telegramminhalte (Sollwerte, Istwerte) bleiben dabei i.d.R. konstant. Diese Struktur kann daher allen Teilnehmern bekannt gemacht werden. Über Zusatzdatenfelder bestünde zusätzlich die Möglichkeit für den Hauptteilnehmer die Nebenteilnehmer zu identifizieren und eine gezielte Kommunikation mit diesen aufzubauen. Zur Koordination könnte auch der als Hauptteilnehmer fungierende Teilnehmer Senderechte an die Nebenteilnehmer vergeben, um den Prozessdatenkanal 11 optimal auszunutzen.

Innerhalb des zweiten Zeitfensters 12 arbeitet man mit wahlfreiem Zugriff, d.h. bei Bedarf kann ein Teilnehmer ohne explizite Vergabe einer Sendeberechtigung durch den Hauptteilnehmer den Kanal nutzen. Es werden hier nur weniger zeitkritische Datentelegramme mittels Protokollen übertragen, beispielsweise zur Konfiguration, Verwaltung oder zu Diagnosezwecken.

Wenn nun ein Datentelegram für Zusatzdaten eine längere Zeitdauer zur Übertragung benötigt, als innerhalb des Zeitfensters 12 pro Zyklus 13 vorgesehen bzw. machbar ist, wird die Telegrammlänge durch den sendenden Teilnehmer so verkürzt, dass dennoch eine entsprechende Übertragung innerhalb der Periodendauer möglich ist. Das Telegramm wird in diesem Falle ggf, auf mehrere Zyklen 13 verteilt. Es ist damit sichergestellt, dass die gesamte Zykluszeit 13 von beispielsweise 62,5 µS, 125 µS, 250 µS oder Vielfachen davon voll ausgenutzt werden kann. Da es sich im Zusatzkanal 12 selten um zeitkritische Informationen handelt, ergibt sich durch diese Aufteilung auf mehrere Zyklen keine relevante Einschränkung. Die zulässige Telegrammlänge für die Zusatzdaten hängt damit von der Zykluszeit 13 und der Länge des für den Prozessdatenkanal erforderlichen Zeitfensters 11 ab. Eine Aufteilung der Echtzeit- und Zusatzdaten auf mehr als nur zwei Zeitfenster 11, 12 wäre natürlich auch denkbar. Selbst die Reihenfolge dieser Zeitfenster 11, 12 könnte innerhalb eines Übertragungszyklus beliebig gewählt sein, so dass beispielsweise auf ein Prozessdatenfenster 11 ein Zusatzdatenfenster 12 und darauf wieder ein Prozessdatenfenster 11 folgt. Hierfür muss lediglich fest definiert sein, welches der Zeitfenster zyklisch und welches azyklisch abgefragt wird.

Der Sendebeginn 14 für die Zusatzdaten im entsprechenden Zeitfenster 12 kann innerhalb dieses Zeitfensters 12 variiert werden, womit die Telegrammlänge abhängig von diesem Sendezeitpunkt anwächst oder vermindert wird. Diese zulässige Telegrammlänge hängt von der gewünschten Übertragungsrate und der zur Verfügung stehenden Restzeit ab. Beispiel: Länge des Prozessdatenfensters 11, z.B. 20 µS, Länge des Übertragungszyklus 13, z.B. 60 µS. Die Länge für das Nutzdaten-Zeitfenster beträgt in diesem Beispiel 40 µS. Aus der gewünschten Übertragungsrate, z.B. 100 Mbit/s, ergibt sich eine zulässige Länge der Datentelegramme für die Nutzdaten von 100 Mbit/s * 40 µS= 400 Bit = 50 Byte.

Diese Übertragungsmethode eignet sich besonders für alle Anwendungen, bei denen eine Regelung von Bewegungsabläufen erforderlich ist und die Prozessdaten in Form von Sollwerten und/oder Istwerten für Lage, Geschwindigkeit, Beschleunigung, evt1. auch Druck und Temperatur zeitkritisch zu übertragen sind.

## Patentansprüche

1. Verfahren zur Datenübertragung zwischen mittels eines Datenbusses kommunizierenden Teilnehmern, wobei für den Austausch von Datentelegrammen zwischen den Teilnehmern innerhalb der für einen Übertragungszyklus (13) vorgegebenen Zykluszeit (13a) wenigstens ein erstes und ein zweites Zeitfenster (11, 12) Verwendung findet, wobei das erste Zeitfenster (11) zur Übermittlung von Prozessdaten und das zweite Zeitfenster (12) zur Übermittlung von Zusatzdaten dient wobei die Länge der die Zusatzdaten repräsentierenden Datentelegramme innerhalb der Länge des korrespondierenden Zeitfensters (12) vorgebbar ist
**dadurch gekennzeichnet, dass**
- die Teilnehmer **aus der Differenz** zwischen der Zykluszeit (13a) und der Länge des Prozessdaten-Zeitfensters (11) die zulässige Länge der Datentelegramme für Zusatzdaten ermitteln
**oder**
- ein Parameter für den zeitlichen Beginn und ein weiterer Parameter für das Ende der die Zusatzdaten repräsentierenden Datentelegramme innerhalb eines Übertragungszyklus vorgesehen wird.

2. Verfahren nach **Anspruch 1**, wobei die Prozessdaten in Echtzeit periodisch und mit jedem Übertragungszyklus (13) übertragen werden.

3. Verfahren nach einem der vorhergehenden Ansprüche, wobei Prozessdaten und/oder Zusatzdaten auf mehr als zwei Zeitfenster (11, 12) gleicher und/oder unterschiedlicher Länge und/oder unterschiedlicher Reihenfolge innerhalb eines Übertragungszyklus (13) verteilt sind.

4. Verfahren nach einem der vorhergehenden Ansprüche, wobei der Sendebeginn (14) für ein Datentelegramm der Zusatzdaten innerhalb der Länge des korrespondierenden Zeitfensters (12) variabel ist.

5. Verfahren nach Anspruch 4, wobei jedem Teilnehmer innerhalb des korrespondierenden Zeitfensters (12) ein fester Zeitpunkt für den Sendebeginn (14) zugeordnet ist.

6. Verfahren nach Anspruch 5, wobei der Zeitpunkt für den Sendebeginn (14) innerhalb jedes Übertragungszyklus (13) neu festgelegt wird, insbesondere mittels eines teilnehmerspezifischen Zufallgenerators oder eines übergeordneten Steuermechanismus.

7. Verfahren nach einem der vorhergehenden Ansprüche, wobei die Daten in einem zweiten Kanal azyklisch übertragen werden.

8. Verfahren nach einem der vorhergehenden Ansprüche, wobei Datentelegramme in Protokolle eingebunden sind.

9. Verfahren nach einem der.vorhergehenden Ansprüche, wobei die Teilnehmer die zulässige Länge der Datentelegramme für Zusatzdaten mittels der Kenntnis der vorgebbaren Sendezeit pro Teilnehmer in einem Zusatzkanal ermitteln.

10. Verfahren nach Anspruch 9, wobei die Teilnehmer basierend auf der Kenntnis der Länge der Datentelegramme für Zusatzdaten ihre Sende- und Empfangsstrukturen dynamisch adaptieren.

11. Verfahren nach einem der vorhergehenden Ansprüche, wobei Datentelegramme auf wenigstens zwei Übertragungszyklen (13) verteilt sind.

12. Verfahren nach einem der vorhergehenden Ansprüche, wobei wenigstens ein Teilnehmer als übergeordneter Hauptteilnehmer fungiert und die zulässige Telegrammlänge der Zusatzdaten an alle weiteren, als Nebenteilnehmer fungierenden, Teilnehmer kommuniziert; insbesondere im Rahmen einer Systeminitialisierung und/oder bei einer Inbetriebnahme

13. Verfahren nach Anspruch 12, wobei Nebenteilnehmer vom Hauptteilnehmer Sendeberechtigungen, insbesondere für Prozessdaten, erhalten.

14. Verfahren nach einem der vorhergehenden Ansprüche, wobei jeder Teilnehmer nach Bedarf Nutzdaten, auch ohne Sendeberechtigung, senden kann.

15. Verfahren nach einem der vorhergehenden Ansprüche, wobei es sich bei den Teilnehmern um digitale Antriebe und/oder Steuerungen handelt, insbesondere zur Ausführung bzw. Regelung von Bewegungsabläufen in automatisierten Prozessen, wobei die Prozessdaten insbesondere Sollwerte und/oder Daten von elektrischen Messsystemen sind.

## Claims

1. Method for transmitting data between subscribers which communicate using a data bus, at least one first time window and one second time window (11, 12) being used to interchange data messages between the subscribers inside the cycle time (13a) predefined for a transmission cycle (13), the first time window (11) being used to transmit process data and the second time window (12) being used to transmit supplementary data, the length of the data messages which represent the supplementary data being able to be predefined inside the length of the corresponding time window (12),
**characterized in that**
- the subscribers use the difference between the cycle time (13a) and the length of the process data time window (11) to determine the permitted length of the data messages for supplementary data,
or
- a parameter is provided for the temporal start, and a further parameter is provided for the end, of the data messages which represent the supplementary data inside a transmission cycle.

2. Method according to Claim 1, the process data being transmitted periodically in real time and with each transmission cycle (13).

3. Method according to one of the preceding claims, process data and/or supplementary data being distributed among more than two time windows (11, 12) of identical and/or different length and/or in a different order inside a transmission cycle (13).

4. Method according to one of the preceding claims, the start of transmission (14) for a data message of the supplementary data being able to be varied inside the length of the corresponding time window (12).

5. Method according to Claim 4, each subscriber being assigned a fixed time for the start of transmission (14) inside the corresponding time window (12).

6. Method according to Claim 5, the time for the start of transmission (14) being redefined inside each transmission cycle (13), in particular using a subscriber-specific random number generator or a superordinate control mechanism.

7. Method according to one of the preceding claims, the data being transmitted acyclically in a second channel.

8. Method according to one of the preceding claims, data messages being incorporated in protocols.

9. Method according to one of the preceding claims, the subscribers determining the permitted length of the data messages for supplementary data using the knowledge of the predefinable transmission time for each subscriber in a supplementary channel.

10. Method according to Claim 9, the subscribers dynamically adapting their transmission and reception structures on the basis of the knowledge of the length of the data messages for supplementary data.

11. Method according to one of the preceding claims, data messages being distributed among at least two transmission cycles (13).

12. Method according to one of the preceding claims, at least one subscriber functioning as a superordinate main subscriber and communicating the permitted message length of the supplementary data to all further subscribers which function as secondary subscribers, in particular as part of system initialization and/or during start-up.

13. Method according to Claim 12, secondary subscribers receiving transmission authorizations, in particular for process data, from the main subscriber.

14. Method according to one of the preceding claims, each subscriber being able to transmit useful data as required, even without transmission authorization.

15. Method according to one of the preceding claims, the subscribers being digital drives and/or controllers, in particular for carrying out or regulating movement sequences in automated processes, the process data being, in particular, desired values and/or data from electrical measuring systems.

## Revendications

1. Procédé de transmission de données entre des participants communiquant au moyen d'un bus de données, dans lequel, pour l'échange de télégrammes de données entre les participants à l'intérieur du temps de cycle (13a) prédéterminé pour un cycle de transmission (13), on utilise au moins un premier et un deuxième intervalles de temps (11, 12), le premier intervalle de temps (11) servant à la transmission de données de processus et le deuxième intervalle de temps (12) servant à la transmission de données supplémentaires, la longueur des télégrammes de données représentant les données supplémentaires pouvant être prédéterminée à l'intérieur de la longueur de l'intervalle de temps correspondant (12),
**caractérisé en ce que**
- les participants déterminent la longueur admissible des télégrammes de données pour les données supplémentaires à partir de la différence entre le temps de cycle (13a) et la longueur de l'intervalle de temps des données de processus (11)
ou
- on prévoit un paramètre pour le début temporel et un autre paramètre pour la fin des télégrammes de données représentant les données supplémentaires à l'intérieur d'un cycle de transmission.

2. Procédé selon la revendication 1, dans lequel les données sont transmises en temps réel périodiquement et avec chaque cycle de transmission (13).

3. Procédé selon l'une des revendications précédentes, dans lequel les données de processus et/ ou les données supplémentaires sont réparties sur plus de deux intervalles de temps (11, 12) de même longueur et/ou de longueurs différentes et/ou des séquences différentes à l'intérieur d'un cycle de transmission (13).

4. Procédé selon l'une des revendications précédentes, dans lequel le début de l'envoi (14) pour un télégramme des données supplémentaires est variable à l'intérieur de la longueur de l'intervalle de temps correspondant (12).

5. Procédé selon la revendication 4, dans lequel à chaque participant à l'intérieur de l'intervalle de temps correspondant (12) correspond un instant fixe pour le début de l'envoi (14).

6. Procédé selon la revendication 5, dans lequel l'instant pour le début de l'envoi (14) à l'intérieur de chaque cycle de transmission (13) est nouvellement déterminé, en particulier au moyen d'un générateur de nombres aléatoires spécifique aux participants ou d'un mécanisme de commande de niveau supérieur.

7. Procédé selon l'une des revendications précédentes, dans lequel les données sont transmises de manière acyclique dans un deuxième canal.

8. Procédé selon l'une des revendications précédentes, dans lequel des télégrammes de données sont intégrés dans des protocoles.

9. Procédé selon l'une des revendications précédentes, dans lequel les participants déterminent la longueur admissible des télégrammes de données pour les données supplémentaires au moyen de la connaissance du temps d'envoi pouvant être prédéterminé pour chaque participant dans un canal supplémentaire.

10. Procédé selon la revendication 9, dans lequel les participants, en se basant sur la connaissance de la longueur des télégrammes de données pour les données supplémentaires, adaptent leurs structures d'envoi et de réception de façon dynamique.

11. Procédé selon l'une des revendications précédentes, dans lequel des télégrammes de données sont répartis sur au moins deux cycles de transmission (13).

12. Procédé selon l'une des revendications précédentes, dans lequel au moins un participant sert de participant principal de niveau supérieur et communique la longueur de télégramme admissible des données supplémentaires à tous les autres participants servant de participants secondaires, en particulier dans le cadre d'une initialisation du système et/ou lors d'une mise en service.

13. Procédé selon la revendication 12, dans lequel des participants secondaires obtiennent du participant principal des autorisations d'envoi, en particulier pour des données de processus.

14. Procédé selon l'une des revendications précédentes, dans lequel chaque participant peut envoyer selon le besoin des données utiles, même sans autorisation d'envoi.

15. Procédé selon l'une des revendications précédentes, dans lequel les participants sont des entraînements numériques et/ou des commandes, en particulier pour l'exécution ou la régulation de séquences de mouvements dans des processus automatisés, les données de processus étant en particulier des valeurs de consigne et/ou des données de systèmes électriques de mesure.
